# EUROPEAN PATENT APPLICATION

(11) **EP 4 686 626 A1**
(43) Date of publication of application: **04.02.2026**
(21) Application number: 24191399.5
(22) Date of filing: 29.07.2024
(51) Int. Cl.: B60T 13/68

(54) **PARKING VALVE ASSEMBLY FOR A BRAKE SYSTEM, BRAKE SYSTEM AND TRAILER**

(71) Applicant: KB Intellectual Property GmbH & Co. KG, 82049 Pullach (DE)
(72) Inventor: Gáyer, József, 80809 München (DE); Pahl, Stefan, 82256 Fürstenfeldbruck (DE); Koncz, Laszlo, 80809 München (DE); Tarnowski, Bartlomiej, 80809 München (DE)

(57) **Abstract**

A parking valve assembly (1) for a brake system (50) is disclosed, the parking valve assembly (1) comprising:
- a valve assembly supply port (2) configured to receive a pneumatic supply pressure;
- at least one valve assembly output port (3) configured to output a pneumatic output pressure;
- a valve assembly control port (4) configured to receive a first control pressure;
- a pressure-controlled valve (6);
- a pressure guiding element (7), wherein

the pressure-controlled valve (6) is configured to connect the valve assembly supply port (2) to the at least one valve assembly output port (3), if a control pressure supplied to a control inlet (6.3) of the pressure-controlled valve (6) exceeds a predetermined threshold,
the pressure guiding element (7) is configured to receive the first control pressure from the valve assembly control port (4) and a second control pressure based on the pneumatic output pressure,
the pressure guiding element (7) is configured to supply the pressure with the higher pressure value of the control pressure and of the second control pressure to the control inlet (6.3) of the pressure-controlled valve (6).

Further, a brake system and a trailer are disclosed.

## Description

The present disclosure relates to a parking valve assembly for a brake system, a brake system and a trailer.

Trailers, in particular for commercial vehicles, comprising self-activated brakes like spring-loaded brake elements need a reliable solution to deactivate the spring-loaded brake elements when the vehicle is moving with the trailer. Otherwise, there is a risk that the brake elements may be activated unintendedly when the vehicle is moving. When the vehicle is in stand still, e.g., in a parking state, the brakes shall be activated reliable.

Therefore, it is an object of the present disclosure, to provide a solution allowing a reliable deactivation of the brake elements when the vehicle is moving.

This object is achieved by the subject matter of the independent claims. Further embodiments are the subject matter of the dependent claims, the following description and the drawings.

The complete disclosure refers to pneumatic applications. For simplification, for the term "pneumatic pressure" the term "pressure" is used synonymously in this disclosure.

According to an aspect of the present disclosure, a parking valve assembly for a brake system is provided. The parking valve assembly comprises a valve assembly supply port configured to receive a pneumatic supply pressure, at least one valve assembly output port configured to output a pneumatic output pressure, a valve assembly control port configured to receive a first control pressure, a pressure-controlled valve and a pressure guiding element.

The pressure-controlled valve is configured to connect the valve assembly supply port to the at least one valve assembly output port, if a control pressure supplied to a control inlet of the pressure-controlled valve exceeds a predetermined threshold.

The pressure guiding element is configured to receive the first control pressure from the valve assembly control port and a second control pressure based on the output pressure.

The pressure guiding element is configured to supply the pressure with the higher pressure value of the first control pressure and of the second control pressure to the control inlet of the pressure-controlled valve.

The output pressure output from the at least one output port may be used to control the brake elements of the brake system.

By supplying the higher pressure to the control inlet of the pressure-controlled valve, the switching state may be automatically controlled by the higher pressure.

The first control pressure may be supplied to the pressure guiding element from the first valve assembly control port.

As a second control pressure is supplied to the pressure guiding element based on the output pressure, feedback is realized to the pressure guiding element about the output pressure supplied from the at least one valve assembly output port. This allows to control the pressure guiding element by the pressure state of the at least one valve assembly output port.

If the second control pressure is higher than the first control pressure, the pressure guiding element will supply the second control pressure to the control inlet of the pressure-controlled valve causing the pressure-controlled valve to connect the valve assembly supply port to the at least one valve assembly output port, if the second control pressure exceeds a predetermined threshold. As the second control pressure is based on the output control pressure, this allows that the parking valve assembly maintains the at least one valve assembly output port pressurized from the valve assembly supply port, if no first control pressure is supplied to the valve assembly control port or if a first control pressure supplied to the valve assembly control port is below the second control pressure supplied to the valve assembly control port.

The at least one valve assembly output port may be configured as a control port, wherein the output pressure supplied by the at least one valve assembly output is a control pressure for controlling the brake system. In particular, the brake system may be configured that brake elements like spring-loaded brake elements are activated when no output pressure is supplied from the at least one valve assembly output port and that the spring-loaded brake elements are deactivated, if an output pressure exceeding a deactivation threshold is supplied from the at least one valve assembly output port.

As the parking valve assembly is configured to maintain the at least one valve assembly output port pressurized based on the second control pressure, the parking valve assembly is configured to deactivate the brake-elements durably without an influence of the first control pressure. Instead, the switching state of the parking valve assembly, wherein the connection between the valve assembly supply port and the at least one valve assembly output port is established once, is self-maintained by the parking valve assembly and therefore, the trailer comprising the brake system can be moved durably.

The supply port may be configured to be connected to a pressure source like a brake system supply port, e.g. a coupling head configured to be connected to a towing vehicle for supplying the pneumatic supply pressure to the parking valve assembly via the valve assembly supply port. Thereby, the parking valve assembly can be used to guide the pressure supplied from the towing vehicle in the brake system.

The pressure guiding element is configured to control the switching state of the pressure-controlled valve. When the pressure guiding element supplies a control pressure to the control inlet of the pressure-controlled valve, exceeding a predetermined threshold of the pressure-controlled valve, the valve assembly supply port and the at least one valve assembly output port are connected via the pressure-controlled valve.

The predetermined threshold of the pressure-controlled valve may be set by a spring reset of the pressure-controlled valve. I.e., if the control pressure supplied to the control inlet of the pressure-controlled is too low or if the control inlet is depressurized, the pressure-controlled valve may disconnect the connection between the valve assembly supply port and the at least one valve assembly output port. I.e., by disconnecting this connection, the parking valve assembly is configured not to supply output pressure from the at least one output port unintendedly, whereby the brake elements of the brake system might be deactivated.

According to one embodiment, the pressure guiding element is a bistable element.

As the pressure guiding element is a bistable element, it will maintain its switching state until the first control pressure or the second control pressure are changed causing the pressure guiding element to change its switching state. Therefore, the parking valve assembly will keep its current switching status of the pressure-controlled valve and of the pressure guiding element. I.e., if the first control pressure or the second control pressure are not changed, the parking valve assembly may keep a brake system in an activated state with no output pressure supplied from the at least one valve assembly output port. In this state, the first control pressure and the second control pressure may be zero. Further, if the first control pressure or the second control pressure are not changed, the parking valve assembly may keep the brake system in a deactivated state with an output pressure supplied from the at least one valve assembly output port sufficient to deactivate the brake elements of the brake system. Therefore, the parking valve assembly of the present disclosure is a reliable solution.

The pressure guiding element may comprise a double check valve. The double check valve may be configured to connect the control inlet of the pressure-controlled valve to the valve assembly control port, if the first control pressure is higher than the second control pressure. In this switching state, the first control pressure controls the pressure-controlled valve. If the second control pressure is higher than the first control pressure, the double check valve is configured to disconnect the valve assembly control port from the control inlet of the pressure-controlled valve and to supply the second control pressure to the control inlet of the pressure-controlled valve. Thereby, the double check valve disconnects the connection between the valve assembly control port of the parking valve assembly and the control inlet of the pressure-controlled valve as the second control pressure may press a blocking member, like a ball, into a valve seat. Thereby, the connection to the valve assembly control port is securely closed. Thereby, as long as the output pressure and thereby the second control pressure based on the output pressure is high enough, the parking valve assembly can maintain this switching state, wherein the second control pressure is supplied to the control inlet of the pressure-controlled valve and wherein the valve assembly supply port is connected to the at least one valve assembly output port. The double check valve is a compact and reliable solution to realize this self-maintaining switching state of the parking valve assembly.

The use of a double check valve has the further advantage that if the second control pressure is decreasing, due to malfunction of the brake system or due to a leakage, a first control pressure exceeding the decreasing supply pressure can be supplied to the double check valve via the valve assembly control port, whereby the blocking element is moved again, to block the second control pressure from the control inlet of the pressure-controlled valve and to supply the first control pressure to the control inlet of the pressure-controlled valve, instead. If this first control pressure exceeds the predetermined threshold of the pressure-controlled valve, the connection between the valve assembly supply port and the at least one valve assembly output port may be maintained avoiding an unintended activation of the brakes of the brake system.

The parking valve assembly may comprise a feedback connection configured for supplying the output pressure or a pressure proportional to the output pressure as the second control pressure to the pressure guiding element. The output pressure may be used directly as the second control pressure. I.e., only one line branching from a line comprising the output pressure must be provided to supply the output pressure as the second control pressure to the pressure guiding element. This may allow a small design of the parking valve assembly. If a pressure proportional to the output pressure shall be supplied to the pressure guiding element, if the pressure guiding element may require lower or higher pressures, a proportional pneumatic transmission element may be provided to proportionally generate the second control pressure from the output port.

This may allow to adapt the size of the pressure guiding element, when the second control pressure may be higher or lower than the output pressure.

The feedback connection may connect a line between the pressure-controlled valve and the at least one valve assembly output port. I.e., the feedback connection is supplied with pressure supplied from the pressure-controlled valve to the output port. In particular, the feedback connection may be arranged within a valve housing or within a common valve body of the parking valve assembly. This allows an integral design of the parking valve assembly.

Alternatively, the feedback connection may connect a second valve assembly control port with the valve assembly output port. I.e., the feedback connection is supplied with output pressure supplied from the at least one valve assembly output port to the feedback connection. In particular, the feedback connection may comprise a line outside of a valve housing or of a common valve body of the parking valve assembly. This allows a flexible design of the parking valve assembly since the line may be freely arranged between the at least one valve assembly output port and the second valve assembly control port.

The parking valve assembly may be configured to maintain the connection of the valve assembly supply port to the at least one valve assembly output port via the pressure-controlled valve, when the valve assembly control port is depressurized . This allows to keep the at least one valve assembly output port pressurized even if the first control pressure is not supplied to the valve assembly control port. This is a switching state of the parking valve assembly, wherein the at least one valve assembly output port is pressurized. I.e., this pressure may be used to keep the brake elements of the brake system reliably and durably deactivated.

The parking valve assembly may comprise an exhaust. The parking valve assembly may be configured to connect the exhaust with lines and/or ports of the parking valve assembly for venting or de-pressurization.

According to one embodiment, the parking valve assembly is configured to connect the at least one valve assembly output port to the exhaust if the supply port is depressurized. In particular, when no more pressure is supplied to the supply port, the parking valve assembly may be configured to depressurize the at least one output port via the exhaust. Thereby, the brakes of the brake system may be activated. This may be a switching state when the trailer is in a parking position or parking state. Thereby, the brakes are activated automatically.

Additionally or alternatively, the pressure-controlled valve may be configured to connect the at least one valve assembly output port to the exhaust if the control inlet of the pressure controlled-valve is depressurized. The pressure-controlled valve may be configured to automatically connect the exhaust to the at least one output port in a depressurized state by a spring reset, i.e., if the control inlet of the pressure-controlled valve is depressurized or vented. This leads to a state, wherein the at least one valve assembly output port is depressurized and the brake elements of the brake system are activated. This switching state is automatically reached. Therefore, the parking valve assembly avoids an unintended deactivation of the brake elements of the brake system, if no control pressure is supplied to the control inlet.

The parking valve assembly may comprise a housing and/or a common valve body, wherein some or all elements of the parking valve assembly are arranged in the housing and/or in the valve body. In particular, the pressure guiding element and/or the pressure-controlled valve may be arranged in the housing or in the common valve body. This allows an integral design of the parking valve assembly.

The pressure-controlled valve may comprise a relay valve. In particular, the pressure-controlled valve may be configured as a relay valve. The relay valve may comprise a first opening connected to the valve assembly supply port and a second opening connected to the at least one valve assembly output port of the parking valve assembly. The control inlet of the pressure-controlled valve may be connected to the pressure guiding element to receive a control pressure, in particular the first or second control pressure. Thereby, a connection between the valve assembly supply port and the at least one valve assembly output port of the parking valve assembly may be controlled by the pressure-controlled valve, wherein, in particular, the pressure-controlled valve is at least configured to establish and to cut off the connection. Such pneumatically controlled relay valve is independent from an electric or electronic activation. In particular, when the pressure-controlled valve is configured as a proportional relay valve, it is possible to control the brake elements between a released state and a fully activated state. I.e., the parking valve assembly may then be used for supplying a pneumatic output pressure for service braking, e.g., when the main service brake function of the trailer is not available.

The pressure-controlled valve may comprise a piston, wherein the piston limits a pressure chamber, wherein an outlet of the pressure guiding element is connected to the pressure chamber. The piston of the pressure-controlled valve may be configured as a control element that is configured to be moved according to a control pressure exceeding a predetermined threshold and supplied to the pressure chamber via the control inlet of the pressure-controlled valve. The piston may be movable along a moving distance between a first piston position and a second piston position, wherein in the first piston position, the connection between the valve assembly supply port and the at least one valve assembly output port is blocked and/or wherein in in the second piston position, the connection between the valve assembly supply port and the at least one valve assembly output port is established.

In particular, in the second piston position, the piston may be configured to move a blocking element of the pressure-controlled valve, whereby the piston abuts to the blocking element. Thereby, the connection between the valve assembly supply port and the at least one valve assembly output port is unblocked and the exhaust is closed. In particular, the blocking element may comprise an opening to the exhaust which is closed due to the piston abutting to the blocking element. Further, when the piston is in the first piston position, the blocking element may be in a position, whereby the exhaust is not closed by the blocking element and whereby the exhaust is connected to the at least one valve assembly output port, in particular via the opening of the blocking element. In this position of the blocking element, the blocking element blocks the connection between the valve assembly supply port and the at least one valve assembly output port. The piston may comprise a spring reset, whereby the piston is reset to the first piston position. The blocking element may comprise a spring reset, whereby the blocking element is reset to the position blocking the connection between the valve assembly supply port and the at least one valve assembly output port and establishing the connection between the exhaust and the at least one valve assembly output port. The blocking element may comprise an elastic material like rubber. The blocking element may be arranged in the moving direction of the piston and in particular may be arranged coaxially to the piston. This allows a compact design of the pressure-controlled valve. The use of such elements like a piston or such a blocking element for controlling or guiding pneumatic pressure allows a design of a valve assembly that is reliable and that may not need any maintenance over lifetime.

According to one example, the pressure guiding element comprises a double check valve or is configured as a double check valve as described above and the pressure-controlled valve comprises a relay valve or is configured as a relay valve as described above. Thereby, a reliable valve is realized is this are simple elements with less movable parts. Optionally, the elements of the parking valve assembly, in particular the pressure-controlled valve and the double check valve are arranged in a common valve body and/or in a housing. Thereby, a compact parking valve assembly is realized.

According to a further aspect of the present disclosure, a brake system for a trailer is provided. For a person skilled in the art, it is clear that features and details related to the brake system which were described above in the context of the parking valve assembly, may also be seen at least as embodiments of the brake system described in the following.

The brake system comprises a parking valve assembly as described above, a control unit, a brake system supply port, a at least one brake element.

The at least one brake element is pressure operated and configured to be deactivated when a brake pressure supplied to the at least one brake element exceeds a predetermined threshold. The at least one brake element may be configured as a spring-loaded brake element.

The control unit may be configured to control a pneumatic control pressure supplied as the first control pressure to the valve assembly control port. Thereby, the control unit may control the connection of the pressure-controlled valve from the valve assembly supply port to the at least one valve assembly output port.

As brake system supply port, the brake system may comprise a coupling head of the trailer configured to be connected to a towing vehicle like a commercial vehicle for receiving a supply pressure. Via the brake system supply port pressure is supplied to the brake system for its operation.

The control unit may be configured as electro-pneumatic control unit. The electro-pneumatic control unit may comprise a valve portion configured to control the control pressure supplied to the first valve assembly control port and/or to the at least one brake element. Additionally or alternatively, the control unit may be configured to receive the output pressure output from the at least one output port of the parking valve assembly.

The control unit may be configured to activate a parking state by venting the at least one valve assembly output port. The venting may be carried out by the control unit.

By providing an electro-pneumatic control unit, the brake system can be controlled electronically, wherein the parking valve assembly forms a part of the brake system, wherein the at least one brake element can be deactivated reliably and independently from the electro-pneumatic control unit.

According to one embodiment, the brake system is configured to deactivate a parking state, by supplying a control pressure exceeding the predetermined threshold to the valve assembly control port. The control pressure may be supplied by the control unit, wherein the valve assembly supply port is connected to the at least one valve assembly output port. Thereby, the pneumatic supply pressure supplied to the valve assembly supply port, e.g. from the brake system supply port, is supplied via the pressure-operated valve of the parking valve assembly to the at least one valve assembly output port of the parking valve assembly. This output port may be supplied to the control unit as a control pressure, wherein the control unit is configured to generate a brake pressure based on the output pressure that is supplied to the at least one brake element of the brake system to deactivate the at least one brake element. Alternatively, the output pressure is directly supplied to the at least one brake element, e.g. by connecting the at least one valve assembly output port directly to the at least one brake element via the control unit. The control unit may in particular be configured to distribute the output pressure from the at least one valve assembly output port to several brake elements of the brake system.

The brake system may be configured to reduce the control pressure or to depressurize the valve assembly control port after deactivation of the at least one brake element. Since the parking valve assembly is configured to maintain the connection from the valve assembly supply pressure to the valve assembly output pressure, after the depressurization of the valve assembly control port, the output pressure is durably supplied from the valve assembly output port to the brake system. Therefore, the brake system may be configured to maintain the deactivation of at least one brake element once the at least one brake element was deactivated.

According to a further aspect of this disclosure, a trailer for a vehicle, in particular for a commercial vehicle, is provided. The trailer comprises a brake system as described above.

In the following, an example of the present disclosure is discussed with reference to the attached drawings.
- Fig. 1: shows a schematic example of a parking valve assembly according to the present disclosure.
- Fig. 2: shows a schematic example of a parking valve assembly according to a first operating state,
- Fig. 3: shows the parking valve assembly of Fig. 2 in a second operating state,
- Fig. 4: shows the parking valve assembly of Fig. 2 in a third operating state, and
- Fig. 5: shows a brake system with a parking valve assembly.

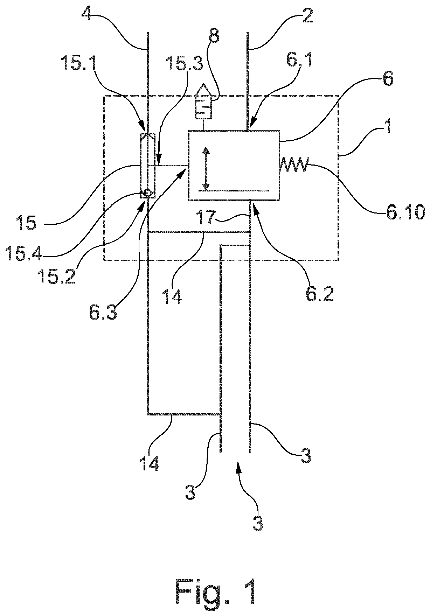

**Fig.** 1 shows a schematic example of a parking valve assembly according to the present disclosure.

A parking valve assembly 1 for a brake system is shown. The parking valve assembly 1 comprises a valve assembly supply port 2 configured to receive a pneumatic supply pressure, at least one valve assembly output port 3 configured to output a pneumatic output pressure, a valve assembly control port 4 configured to receive a first control pressure, a pressure-controlled valve 6 and a pressure guiding element 15.

The pressure-controlled valve 6 is configured to connect the valve assembly supply port 2 to the at least one valve assembly output port 3, if a control pressure supplied to a control inlet 6.3 of the pressure-controlled valve 6 exceeds a predetermined threshold.

The predetermined threshold can be set by a reset spring element 6.7, wherein the respective control pressure must act against the reset spring element 6.7 to switch the pressure-controlled valve 6, respectively.

The pressure guiding element 15 is configured to receive the first control pressure from the valve assembly control port 4 and to receive a second control pressure based on the pneumatic output pressure. To receive the second control pressure, two embodiments are shown in the drawing. According to the first optional embodiment, a feedback connection 14 is provided between a line 17 connecting the pressure-controlled valve 6, in particular a second opening 6.2 of the pressure-controlled valve 6 to the at least one valve assembly output port 3 and a second inlet 15.2 of the pressure guiding element 15, I.e. the feedback connection 14 according to the first embodiment is provided within the parking valve assembly 1 leading to a compact design of the parking valve assembly 1. According to the second optional embodiment, a feedback connection 14 is provided between one of the at least one valve assembly output port 3 and a second valve assembly control port 5 connected to the second inlet 15.2 of the pressure guiding element 15. I.e. the feedback connection 14 is provided outside the parking valve assembly 1 leading to a flexible design of the parking valve assembly 1 or of a brake system, the parking valve assembly 1 is provided in, since the feedback connection 14 may be freely arranged.

The pressure guiding element 15 is configured to supply the pressure with the higher pressure value and of the second control pressure to the control inlet 6.3 of the pressure-controlled valve 6. The control pressure is supplied from the valve assembly control port 4 to the first inlet 15.1 of the pressure guiding element 15. The second control pressure is supplied from the at least one valve assembly output port 3 or from the line 17 to the second inlet 15.2.

In the shown embodiment, the pressure guiding element 15 is configured as a double check valve with a blocking member 15.4, like a ball, configured to block the first inlet 15.1 or the second inlet 15.2. Therefore, the pressure guiding element 15 is configured to connect either the first inlet 15.1 or the second inlet 15.2 to the outlet 15.3 of the pressure guiding element 15 and therefore to the control port 6.3 of the pressure-controlled valve 6, depending on the higher pressure supplied to the first inlet 15.1 and the second inlet 15.2.

The pressure guiding element 15 is a bistable element, i.e. the connection established once is maintained until the pressures supplied to the first inlet 15.1 and to the second inlet 15.2 cause a change of the switching state of the pressure guiding element 15.

The parking valve assembly 1 works as follows.

The parking valve assembly 1 may be used in a brake system, wherein the brake system is activated, i.e., the brake elements are activated, when no output pressure is output from the at least one valve assembly output port 3. The brake elements may be configured as spring-loaded brake elements, like spring-loaded brake cylinders. The brake system may be the brake system of a trailer of a commercial vehicle.

In the shown state, the parking valve assembly 1 is vented. I.e., the pressure-controlled valve 6 disconnects its first opening 6.1 from its second opening 6.2. Thereby, a connection between the valve assembly supply port 2 and the at least one valve assembly output port 3 is blocked and instead, the pressure-controlled valve 6 connects the second opening 6.2 and therefore, the at least one valve assembly output port 3 to an exhaust 8.

As no output pressure is output from the at least one valve assembly output port 3, the brake system may be activated, and the trailer may be in a parked state.

When a pneumatic supply pressure is supplied to the valve assembly supply port 2, e.g. as the trailer is coupled to a towing vehicle, wherein the supply pressure is supplied from the towing vehicle to the valve assembly supply port 2 via a coupling head of the brake system, the parking valve assembly 1 stays in the shown state, wherein the connection between the valve assembly supply port 2 and the at least one valve assembly output port 3 is blocked by the pressure-controlled valve 6. I.e., in this state, the valve assembly supply port 2 is pressurized however, no pneumatic pressure is supplied to the at least one valve assembly output port 3. I.e., the brake elements of the brake system stay activated.

For deactivating the brake elements, a first control pressure is supplied to the first valve assembly control port 4. The control pressure may be supplied to the first valve assembly control port 4 by a control unit of the brake system. The first control pressure is supplied to the first inlet 15.1 of the pressure guiding element 15. As the second inlet 15.2 is not pressurized, the pressure guiding element 15 stays in the shown state connecting the first inlet 15.1 to the outlet 15.3 and therefore, connecting the first valve assembly control port 4 to the control inlet 6.3 of the pressure-controlled valve 6. If the first control pressure exceeds the predetermined threshold set by the reset spring element 6.7, the pressure-controlled valve 6 changes its switching state, wherein it disconnects the connection between the second opening 6.2 and the exhaust 8, i.e. between the at least one valve assembly output port 3 and the exhaust 8, and wherein it connects the first opening 6.1 to the second opening 6.2 and therefore the valve assembly supply port 2 to the at least one valve assembly output port 3. In this state, pressure is supplied from the valve assembly supply port 2 to the at least one valve assembly output port 3 via the pressure-controlled valve 6. The output pressure supplied from the valve assembly output port 3 to the brake system causes the brake elements of the brake system to be deactivated.

Further, via the feedback connection 14, pressure from line 17 is supplied to the second inlet 15.2 of the pressure guiding element 15. The blocking member 15.4 in this state blocks the second inlet 15.2 due to the first control pressure supplied to the first inlet 15.1 and the blocking member 15.4 is kept in this position until the force generated by the pressure acting on the blocking member 15.4 from the second inlet 15.2 exceeds the force acting on the blocking member 15.4 generated by the pressure acting on the blocking member 15.4 from the first inlet 15.1.

When the at least one valve assembly output port 3 is fully pressurized, i.e., when the output pressure output from the at least one valve assembly output port 3 is equal to the supply pressure supplied to the valve assembly supply port 2, the maximum force acting on the blocking member 15.4 is generated by the pressure supplied to the inlet 15.2. The control pressure supplied to the first valve assembly control port 4 generates the same force as the supply pressure supplied to the valve assembly supply port 2. As the forces acting on the blocking member 15.4 are equal, but opposed, the blocking member 15.4 stays in the shown position blocking the second inlet 15.2.

The pressure guiding element 15 is configured to connect the second inlet 15.2 to the outlet 15.3 and therefore to the control inlet 6.3 of the pressure-controlled valve 6 if the first control pressure supplied to the first valve assembly control port 4 is reduced. I.e., if a source supplying the first control pressure, like the control unit of the brake system, stops supplying the first control pressure, e.g. when the first valve assembly control port 4 is vented, the pressure still acting on the second inlet 15.2 from the feedback connection 14 causes the blocking member 15.4 to switch its position to block the first inlet and to open the second inlet 15.2. Thereby, a connection from the second opening 6.2 of the pressure-controlled valve 6 via the second inlet 15.2 to the control inlet 6.3 is established. I.e., the pneumatic supply pressure from the valve assembly supply port 2 is supplied to the control inlet 6.3, wherein the pressure-controlled valve 6 is configured to maintain the connection between the valve assembly supply port 2 and the at least one valve assembly output port 3. I.e., due to the supply pressure supplied as a control pressure to the control inlet 6.3, the parking valve assembly 1 is a self-maintaining valve assembly, whereby the output pressure at the at least one output port 3 is reliably and durably maintained independently from the control pressure supplied to the first valve assembly control port 4. I.e., the brake element of the brake system may be deactivated reliably and permanently and therefore, the trailer may be moved by the towing vehicle without the risk of activation of the brake elements at an unintended point of time.

To reactivate the brakes, e.g. for parking the trailer, in particular when the trailer is uncoupled from the towing vehicle, venting the valve assembly supply port 2 leads to a venting of the at least one valve assembly output port 3 and therefore to a reactivation of the brake elements of the brake system. When the valve assembly supply port 2 is vented, e.g. by uncoupling the trailer from the towing vehicle, e.g. by disconnecting the coupling head, or by the control unit, the pressure supplied to the at least one valve assembly output port 3 and to the control inlet 6.3 is reduced in the same amount as it is the same pressure, namely the pneumatic supply pressure.

If the supply pressure supplied to the control inlet 6.3 is below the threshold set by the reset spring element 6.7, the pressure controlled valve 6 returns to the shown switching state, wherein the second opening 6.2 and thereby the at least one valve assembly output port 3 is connected to the exhaust 8 whereby the at least one valve assembly output port 3 is vented. Further, the control inlet 6.3 is vented via a connection of the bistable pressure guiding element 15 still connecting the outlet 15.3 to the second inlet 15.2, the and the feedback connection 14 and the pressure-controlled valve 6 to the exhaust 8. In this state, no output pressure is supplied from the at least one valve assembly output port 3 and therefore, the brake elements are activated. The brake system respectively the trailer, is in a parking state.

The parking valve assembly 1 according to Fig. 1 is a general concept to realize a brake system with a reliable deactivation of the brake elements when the vehicle is moving, wherein the deactivation is self-maintaining.

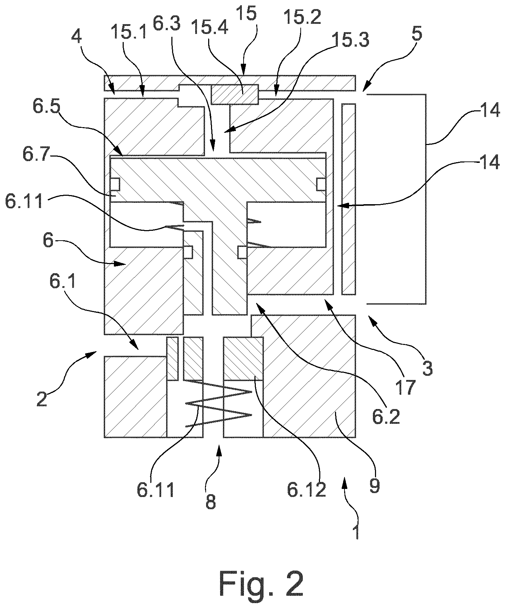

**Fig.** 2 shows a schematic example of a parking valve assembly according to a first operating state.

The parking valve assembly 1 is shown in a depressurized state.

A sectional view of a valve body9 is shown. The valve body9 comprises a valve assembly supply port 2, a valve assembly output port 3, a first valve assembly control port 4, a pressure-controlled valve 6 and a pressure guiding element 15.

As the shown parking valve assembly 1 is an embodiment of the parking valve assembly 1 according to Fig. 1, the same elements are labelled with the same reference signs.

The pressure-controlled valve 6 comprises a first opening 6.1 connected to the valve assembly supply port 2, a second opening 6.2 connected to the valve assembly output port 3, a piston 6.7 guided in the valve body 9 and limiting a pressure chamber 6.5, a blocking element 6.12 and reset springs 6.11 acting on the piston 6.7 and on the blocking element 6.12, respectively.

In the shown state, the piston 6.7 is in a first piston position, wherein the piston 6.7 is held in the first piston position by the reset spring 6.11 acting on the piston 6.7. In this position, the pressure chamber 6.5 has a minimum extension, wherein the pressure chamber 6.5 can be extended when the piston 6.7 is moved downwards into the second piston position.

In the shown state, the blocking element 6.12 is in a first position, wherein the blocking element 6.12 is held in the first position by the reset spring 6.11 acting on the blocking element 6.12. The blocking element 6.12 comprises a hole, in particular a through hole, wherein in the shown state, a connection from the valve assembly output port 3 to the exhaust 8 of the parking valve assembly 1 is established. Further, in the shown state, the blocking element 6.12 blocks a connection between the valve assembly supply port 2 and the valve assembly output port 3.

Further, the two embodiments of the feedback connection 14 according to Fig. 1 are shown. According to the first embodiment, the feedback connection 14 is provided within the valve body 9 connecting the line 17 with the inlet 15.2 of the pressure guiding element 15. According to the second embodiment, the feedback connection 14 is provided outside the valve body9 connecting the valve assembly output port 3 to the second valve assembly control port 5 and further to the inlet 15.2 of the pressure guiding element 15. As it can be seen, the first embodiment leads to an integral embodiment of the parking valve assembly 1. In contrast, the second embodiment leads to a more flexible design of the parking valve assembly 1, wherein the feedback connection 14 between the valve assembly output port 3 and the second valve assembly control port 5 can be freely arranged.

The parking valve assembly 1 works as follows.

When a pneumatic supply pressure is supplied to the valve assembly supply port 2, e.g. as the trailer is coupled to a towing vehicle, wherein the supply pressure is supplied from the towing vehicle to the valve assembly supply port 2 via a coupling head of the brake system, the parking valve assembly 1 stays in the shown state, wherein the connection between the valve assembly supply port 2 and the valve assembly output port 3 is blocked by the blocking element 6.12 of the pressure-controlled valve 6. I.e., in this state, the valve assembly supply port 2 is pressurized however, no pneumatic pressure is supplied to the valve assembly output port 3. I.e., the brake elements of the brake system stay activated.

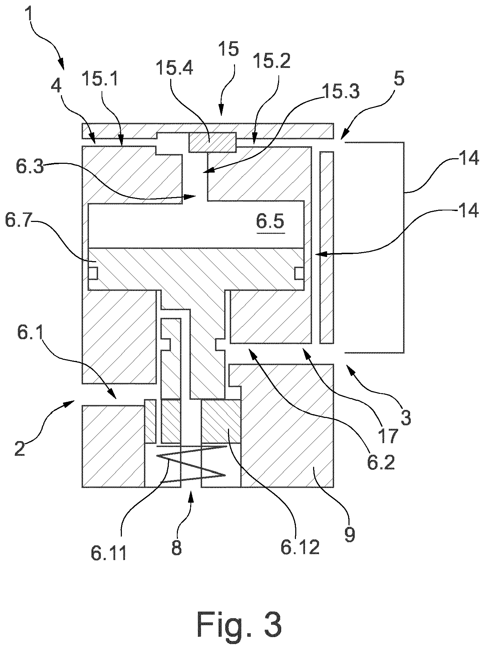

For deactivating the brake elements, a first control pressure is supplied to the first valve assembly control port 4. This state is shown in **Fig. 3****.** The control pressure may be supplied to the first valve assembly control port 4 by a control unit of the brake system. The first control pressure is supplied to the first inlet 15.1 of the pressure guiding element 15. As the second inlet 15.2 is not pressurized, the pressure guiding element 15 stays in the shown state connecting the first inlet 15.1 to the outlet 15.3 and therefore, connecting the first valve assembly control port 4 to the control inlet 6.3 of the pressure-controlled valve 6. Thereby, the first control pressure is supplied to the pressure chamber 6.5. If the first control pressure exceeds the predetermined threshold set by the reset spring 6.6 acting on the piston 6.7, the pressure-controlled valve 6 changes its switching state, wherein it disconnects the connection between the second opening 6.2 and the exhaust 8, i.e. between the valve assembly output port 3 and the exhaust 8. This is realized by moving the piston 6.7 from the first piston position into the second piston position due to the first control pressure acting on the piston 6.7 in the pressure chamber 6.5. In the second piston position, the piston 6.7 or an element extending from the piston towards the blocking element 6.12 as shown in the drawing abuts to the blocking element 6.12, thereby closing the opening of the blocking element 6.12 and thereby closing the connection from the second opening 6.2 to the exhaust 8. Further, in this state, the blocking element 6.12 was moved by the piston 6.7 downwards, wherein, when the piston 6.7 is in the second piston position as shown in the drawing, the blocking element 6.12 releases a connection from the first opening 6.1 to the second opening 6.2 and therefore from the valve assembly supply port 2 to the valve assembly output port 3. In this state, pressure is supplied from the valve assembly supply port 2 to the valve assembly output port 3 via the pressure-controlled valve 6. The output pressure supplied from the valve assembly output port 3 to the brake system causes the brake elements of the brake system to be deactivated.

Further, via the feedback connection 14, pressure from line 17 is supplied to the second inlet 15.2 of the pressure guiding element 15. The blocking member 15.4 in this state blocks the second inlet 15.2 due to the first control pressure supplied to the first inlet 15.1 and the blocking member 15.4 is kept in this position until the force generated by the pressure acting on the blocking member 15.4 from the second inlet 15.2 exceeds the force acting on the blocking member 15.4 generated by the pressure acting on the blocking member 15.4 from the first inlet 15.1.

Analogously to the parking valve assembly shown in Fig. 1, the blocking member 15.4 stays in the shown position blocking the second inlet 15.2 when the valve assembly output port 3 is fully pressurized. As described in the context to Fig. 1, the forces acting in the blocking member 15.4 due to the pressures supplied to the first inlet 15.1 and to the second inlet 15.2 are equal but opposite to each other in this state. I.e., the blocking member 15.4 stays in the shown position blocking the second inlet 15.2.

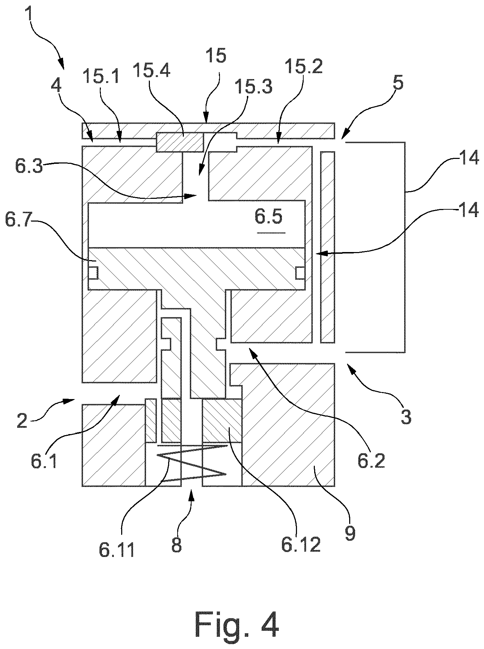

When a source supplying the first control pressure, like the control unit of the brake system, stops supplying the first control pressure, e.g. when the first valve assembly control port 4 is vented, the pressure still acting on the second inlet 15.2 from the feedback connection 14 causes the blocking member 15.4 to switch its position to block the first inlet 15.1 and to open the second inlet 15.2. This state is shown in **Fig. 4****.**

Thereby, a connection from the second opening 6.2 of the pressure-controlled valve 6 via the feedback line 14 and the second inlet 15.2 to the control inlet 6.3 is established. I.e., the pressure chamber 6.5 is supplied with pressure from the second opening 6.2 and therefore from the valve assembly supply port 2. Therefore, this pressure, in particular the supply pressure from the valve assembly supply port 2, acts on the piston 6.4 against the corresponding reset spring 6.11. Therefore, the piston is maintained in the second piston position, wherein the blocking element 6.12 is kept in its lower position as well, due to the abutting to the piston 6.7. By keeping the piston 6.7 in the second piston position by the pressure supplied from the second outlet 6.2 via the feedback connection 14 to the second inlet 15.2, the connection between the valve assembly supply port 2 and the valve assembly output port 3 is maintained. I.e., due to the supply pressure supplied as a control pressure to the control inlet 6.3, the parking valve assembly 1 is a self-maintaining valve assembly, whereby the output pressure at the output port 3 is reliably and durably maintained independently from the control pressure supplied to the first valve assembly control port 4. I.e., the brake elements of the brake system the parking valve assembly 1 is provided in may be deactivated reliably and permanently and therefore, the trailer may be moved by the towing vehicle without the risk of activation of the brake elements at an unintended point of time.

To reactivate the brakes, e.g. for parking the trailer, in particular when the trailer is uncoupled from the towing vehicle, venting the valve assembly supply port 2 leads to a venting of the at least one valve assembly output port 3 and therefore to a reactivation of the brake elements of the brake system. When the valve assembly supply port 2 is vented, e.g. by uncoupling the trailer from the towing vehicle, e.g. by disconnecting the coupling head, or by the control unit, the pressure supplied to the valve assembly output port 3 and to the control inlet 6.3 via the feedback line 14 is reduced simultaneously as it is the same pressure, namely the pneumatic supply pressure.

If the supply pressure supplied to the control inlet 6.3 is below the threshold set by the reset springs 6.11 which are connected in series due to the abutting of the piston 6.7 and the blocking element 6.12, the piston 6.7 returns to the first piston position as shown in Fig. 2 and the blocking element 6.12 returns to the position shown in Fig. 2 due to the reset springs 6.11. In this state, the connection between the exhaust 8 and the second opening 6.2 is reestablished leading to a venting of the output port 3 by the exhaust 8 via line 17 and leading to a venting of the control inlet 6.3, respectively the pressure chamber 6.5 via the pressure guiding element 15, the feedback connection 14 and the line 17. In this state, no output pressure is supplied from the at least one valve assembly output port 3 and therefore, the brake elements are activated. The brake system respectively the trailer, is in a parking state.

The parking valve assembly 1 according to Fig. 2 to 4 shows technical possibilities for realizing the general concept of the parking valve assembly 1 according to Fig. 1. In particular, the pressure-controlled valve 6 and the pressure guiding element 15 are provided in the same valve body 9 wherein the axis of the piston 6.7 and the axis of the blocking element 6.12 are arranged coaxially to each other, leading to a compact design of the parking valve assembly 1.

In particular, the valve assembly 1 shown in Fig. 2 to 4 can be configured as a single valve.

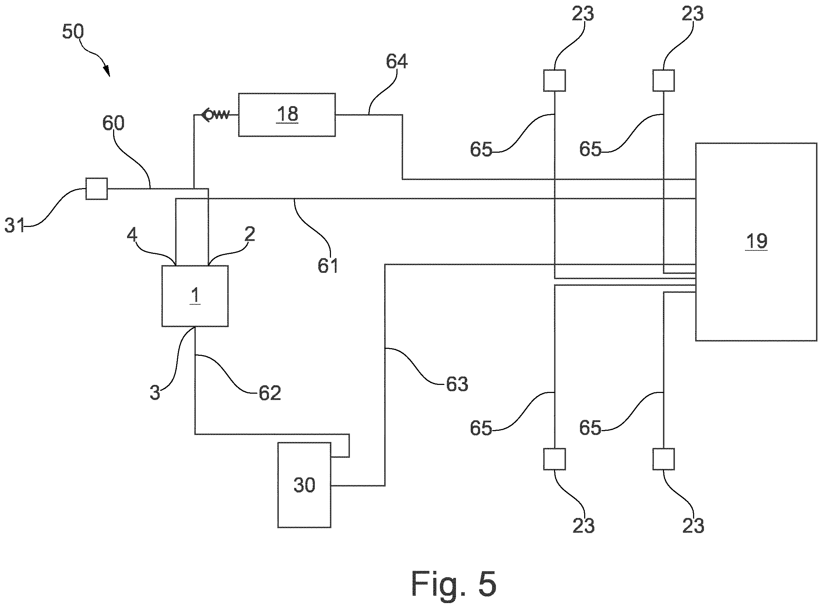

**Fig.** 5 shows a brake system for a trailer with a parking valve assembly.

The brake system 50 comprises a parking valve assembly 1, a brake system supply port 31, e.g. a coupling head configured to be connected to a towing vehicle, a control unit 19 and brake elements 23, on particular spring-loaded brake elements.

The brake system supply port 31 is connected to the valve assembly supply port 2 via a pneumatic line 60. The control unit 19 is connected to the first valve assembly control port 4 via a pneumatic line 61, whereby the control unit 19 can supply a first control pressure to the first valve assembly control port 4 to control the switching state of the parking valve assembly 1.

The valve assembly output port 3 is connected to a control valve assembly 30 of the brake system 50 via a pneumatic line 62. The control valve assembly 30 may be configured as a park and/or shunt valve. The control valve assembly 30 is connected to the control unit 19 via the pneumatic line 63.

The brake elements 23 are connected to the control unit 19 via pneumatic lines 65.

Further, the control unit 19 is connected to line 60 via a pressure reservoir 18 and line 64. Thereby, pressure can be supplied as supply pressure to the control unit 19. The pressure reservoir 18 may be supplied from the brake system supply port 31 via line 60, wherein the pressure reservoir 18 is secured against the brake system supply port 31 by a check valve.

The brake system 50 works as follows.

When the trailer is in a parked state and when the brake system supply port 31 is depressurized, lines 60, 61, 62, 63 and 65 are depressurized and therefore, the brake elements 23 are activated holding the trailer in a non-moving state.

When a towing vehicle is connected to the brake system supply port 31, line 60 is pressurized from the towing vehicle acting as pressure source.

To deactivate the parking state, the control unit 19 is configured to supply a first control pressure via the line 61 to the first valve assembly control port 4. Thereby, the parking valve assembly 1 is switched to a state connecting the valve assembly supply port 2 to the valve assembly output port 3. Therefore, pneumatic supply pressure is supplied from the brake system supply port 31 via the parking valve assembly 1 via the line 62 to the control valve assembly 30. As the control valve assembly 30 is in a switching state, connecting the line 62 to the line 63, the supply pressure is supplied to the control unit 19.

The control unit 19 is in a switching state, wherein the pressure from line 63 is supplied to the brake elements 23 via the lines 65. The brake elements 23 are then deactivated by the supplied pressure, wherein the parking state of the brake system 50 is deactivated. As described above, the parking valve assembly 1 is configured to self-maintain the connection between the valve assembly supply port 2 to the valve assembly output port 3 and therefore the connection between the brake system supply port 31 and the brake elements 23 is self-maintained. Therefore, the brake system 50 can maintain the deactivation of the brake elements 23 reliably and durably.

If the trailer is decoupled from the towing vehicle, the brake system supply port 31 is depressurized. This leads to a depressurization of the valve assembly supply port 2 and therefore, the parking valve assembly 1 depressurizes the at least one valve assembly output port 3 and via the connected lines 62, 63 and 65 the brake elements 23 are depressurized as well. Therefore, the brake elements 23 are activated and the brake system 50 is in the parking state.

If the trailer is not decoupled from the towing vehicle and the brake system supply port 31 is therefore still pressurized, the control valve assembly 30 can switched to a state, wherein the lines 62 and 63 are depressurized and therefore, the at least one valve assembly output port 3 and the brake elements 23 are depressurized. Therefore, the brake elements 23 are activated and the parking valve assembly disconnects the connection between the valve assembly supply port 2 and the at least one valve assembly output port 3. As described in Fig. 1, the at least one valve assembly output port 3 is then connected to the exhaust of the parking valve assembly 1. The brake system 50 is in the parking state now.

The present disclosure relates to elements like valve assemblies or arrangements for brake systems, in particular, safepark systems, and such brake systems designed these valve assemblies to avoid rollaway accidents in case of wrong coupling head connection order by driver. In particular, for each of the embodiments shown in this disclosure, the brake elements of such brake system are only released acively be a signal, e.g. a control signal from the brake system or from the control unit.

### REFERENCE SIGNS

- 1: parking valve assembly
- 2: valve assembly supply port
- 3: valve assembly output port
- 4: first valve assembly control port
- 5: second valve assembly control port
- 6: pressure-controlled valve
- 6.1: first opening
- 6.2: second opening
- 6.3: control inlet
- 6.5: pressure chamber
- 6.7: piston
- 6.10: reset spring element
- 6.11: reset spring
- 6.12: blocking element
- 8: exhaust
- 9: valve body
- 14: feedback connection
- 15: pressure guiding element
- 15.1: first inlet
- 15.2: second inlet
- 15.3: outlet
- 15.4: blocking member
- 17: line
- 18: pressure reservoir
- 19: control unit
- 23: brake element
- 30: control valve assembly
- 31: brake system supply port
- 50: brake system
- 60-66: lines

## Claims

1. A parking valve assembly (1) for a brake system (50), the parking valve assembly (1) comprising:
- a valve assembly supply port (2) configured to receive a pneumatic supply pressure;
- at least one valve assembly output port (3) configured to output a pneumatic output pressure;
- a valve assembly control port (4) configured to receive a first control pressure;
- a pressure-controlled valve (6);
- a pressure guiding element (15), wherein
the pressure-controlled valve (6) is configured to connect the valve assembly supply port (2) to the at least one valve assembly output port (3), if a control pressure supplied to a control inlet (6.3) of the pressure-controlled valve (6) exceeds a predetermined threshold,
the pressure guiding element (15) is configured to receive the first control pressure from the valve assembly control port (4) and a second control pressure based on the pneumatic output pressure,
the pressure guiding element (15) is configured to supply the pressure with the higher pressure value of the control pressure and of the second control pressure to the control inlet (6.3) of the pressure-controlled valve (6).

2. The parking valve assembly (1) according to claim 1, wherein
the pressure guiding element (15) is a bistable element.

3. The parking valve assembly (1) according to claim 1 or 2, wherein
the pressure guiding element (15) comprises a double check valve.

4. The parking valve assembly (1) according to any of the preceding claims, wherein
the parking valve assembly (1) comprises a feedback connection (14) configured for supplying the output pressure or a pressure proportional to the output pressure as the second control pressure to the pressure guiding element (15).

5. The parking valve assembly (1) according to claim 4, wherein
the feedback connection (14) connects a line (17) between the pressure-controlled valve (6) and the at least one valve assembly output port (3) or wherein the feedback connection (14) connects a second valve assembly control port (5) to the at least one valve assembly output port (3).

6. The parking valve assembly (1) according to any of the preceding claims, wherein
the valve assembly (1) is configured to maintain the connection of the valve assembly supply port (2) to the at least one valve assembly output port (3) via the pressure-controlled valve (6), when the valve assembly control port (4) is depressurized.

7. The parking valve assembly (1) according to one of the preceding claims, wherein
the parking valve assembly (1) comprises an exhaust (8).

8. The parking valve assembly (1) according to claim 7, wherein
the pressure-controlled valve (6), is configured to connect the at least one valve assembly output port (3) to the exhaust (8) if the control inlet (6.3) is depressurized, and/or wherein
the parking valve assembly (1) is configured to connect the at least one valve assembly output port (3) to the exhaust (8) if the valve assembly supply port (2) is depressurized.

9. The parking valve assembly (1) according to one of the preceding claims, wherein
the pressure guiding element (15) and the pressure-controlled valve (6) are arranged in a common valve body (9) and/or in a housing.

10. The parking valve assembly (1) according to one of the preceding claims, wherein
the pressure-controlled valve (6) comprises a relay valve.

11. The parking valve assembly (1) according to one of the preceding claims, wherein
the pressure-controlled valve (6) comprises a piston (6.4), wherein the piston (6.4) limits a pressure chamber (6.5), wherein an outlet (15.3) of the pressure guiding element (15) is connected to the pressure chamber (6.5).

12. A brake system (50) for a trailer, the brake system (50) comprises
- a parking valve assembly (1) according to one of the claims 1 to 11;
- a control unit (19);
- a brake system supply port (31);
- a at least one brake element (23); wherein
the at least one brake element (23) is pressure operated and configured to be deactivated when a brake pressure supplied to the at least one brake element (23) exceeds a predetermined threshold, and
the control unit (19) is configured to control a pneumatic control pressure supplied as the control pressure to the valve assembly control port (4).

13. The brake system (50) according to claim 12, wherein
the brake system (50) is configured to deactivate a parking state, by supplying a control pressure exceeding the predetermined threshold to the valve assembly control port (4).

14. The brake system (50) according to claim 13, wherein
the brake system (50) is configured to depressurize the control pressure after deactivation of the at least one brake element.

15. A trailer for a vehicle, in particular for a commercial vehicle, comprising a brake system (50) according to one of the claims 12 to 14.
